# EUROPÄISCHE PATENTSCHRIFT

(11) **EP 1 055 849 B1**
(45) Veröffentlichungstag und Bekanntmachung des Hinweises auf die Patenterteilung: **17.11.2004**
(21) Anmeldenummer: 00108490.4
(22) Anmeldetag: 19.04.2000
(51) Int. Cl.: F16J 15/32, F16J 15/48

(54) **Dichtung zur Abdichtung druckbeaufschlagter Räume**
Sealing assembly for pressurized enclosures
Joint d'étanchéité pour chambres sous pression

(30) Priorität: 22.05.1999 DE 19923723; 11.03.2000 DE 10011984
(43) Veröffentlichungstag der Anmeldung: 29.11.2000
(73) Patentinhaber: Carl Freudenberg KG, 69469 Weinheim (DE)
(72) Erfinder: Jungmann, Sven, 74937 Spechbach (DE); Bock, Eberhard, Dr., 69509 Mörlenbach (DE); Schwerdtfeger, Markus, 68163 Mannheim (DE)

(56) Entgegenhaltungen:
- EP-A- 0 357 875
- DE-A- 4 039 666
- DE-A- 4 243 828
- US-A- 3 443 814
- US-A- 4 300 778

## Beschreibung

Die Erfindung betrifft einen Dichtring zur Abdichtung druckbeaufschlagter Räume gemäß Oberbegriff des Patentanspruchs 1.

Ein Dichtring der vorstehend genannten Art ist aus DE 40 39 666 A bekannt.

Aus DE 36 16 689 C1 ist ferner ein Dichtring zur Abdichtung rotierender Wellen oder axial bewegter Stangen bekannt. Innerhalb des abzudichtenden Raums ist der aus einem Kunststoff bestehende Dichtring angeordnet, wobei der Dichtring eine Dichtkante aufweist und einen Spannring aus elastomerem Werkstoff, der separat erzeugt ist und als Nebenabdichtung wirkt. Mittels des Spannrings wird die Dichtkante in Abhängigkeit von den jeweiligen Druckverhältnissen druckbeaufschlagt, wobei der in einem Spalt zwischen dem Dichtring und der abzudichtenden Welle oder Stange anliegende Druck die Dichtkante entlastet. Die radiale Dichtkantenebene befindet sich nahe der niederdruckseitigen Anlagefläche des Spannrings. Mittels der axialen Lage der Dichtkante wird der Grad der Entlastung so eingestellt und vorzugsweise mittels einer definierten elastischen Nachgiebigkeit des Spannrings bei steigendem Druck verändert, daß die Dichtkante nur eine dichtungstechnisch notwendige, geringe Anpressung erfährt, wodurch bei bewegter Welle oder Stange die Reibung reduziert ist.

Der Erfindung liegt die Aufgabe zugrunde, einen Dichtring der eingangs genannten Art derart weiterzuentwickeln, daß dieser einen vereinfachten Aufbau aufweist und in fertigungstechnischer und wirtschaftlicher Hinsicht einfach und kostengünstig herstellbar ist.

Nach der Erfindung wird hierzu ein Dichtring zur Abdichtung druckbeaufschlagter Räume bereitgestellt, welcher die Merkmale des Patentanspruches aufweist.

Gemäß einer vorteilhaften Ausgestaltung kann es vorgesehen sein, dass die erste Dichtlippe eine dynamisch beanspruchte erste Dichtkante aufweist, die durch zwei einander durchschneidende Kegelflächen begrenzt ist, wobei die dem abzudichtenden Raum zugewandte erste Kegelfläche mit der Oberfläche einer abzudichtenden Stange oder Welle einen größeren Winkel einschließt, als die dem abzudichtenden Raum abgewandten zweite Kegelfläche.

Die Dichtkante kann abgerundet ausgebildet sein. Hierdurch ergibt sich ein verbessertes Verschleissverhalten sowie eine vereinfachte Herstellbarkeit, wenn die Herstellung durch Spritzpressen erfolgt. Als zweckmäßig hat es sich erwiesen, wenn die Abrundung einen Radius von 0,05 bis 0,3 mm aufweist, zweckmäßig einen Wert, der zwischen 0,1 und 0,2 mm liegt.

Hierbei ist von Vorteil, daß der Dichtring einen einfachen, teilearmen Aufbau aufweist und daher einfach und kostengüstig herstellbar ist. Dadurch, daß sich die Dichtlippe, ausgehend vom Radialsteg axial vom abzudichtenden Raumweg erstreckt, liegt der innerhalb des abzudichtenden Raums herrschende Druck auch zwischen der abzudichtenden Stange oder Welle und der radial innenseitigen Begrenzung der Dichtlippe an. Die leitungsförmige Durchbrechung bewirkt, daß sich abzudichtendes Medium auch radial außenseitig der Dichtlippe befindet und die Dichtlippe auch radial außenseitig mit dem Druck aus dem abzudichtenden Raum beaufschlagt ist. Radial innenseitig und radial außenseitig der Dichtlippe wirkt im wesentlichen der selbe Druck, so daß eine unerwünscht hohe Anpressung der ersten Dichtkante auf die abzudichtende Oberfläche und daraus resultierender, hoher abrasiver Verschleiß, beispielsweise bei Druckstößen im abzudichtenden Raum, und die Gefahr auftretender Leckage vermieden wird.

Sowohl die erste als auch die zweite Dichtlippe können in Abhängigkeit von den jeweiligen Gegebenheiten des Anwendungsfalles statt der Dichtkanten eine herstellungsbedingt gerundete oder ebene Dichtkante aufweisen.

Die die erste Dichtkante bildenden Kegelflächen sind derart gestaltet, daß sowohl eine ausgezeichnete Abdichtung als auch eine gute Schmierung der Dichtkante ermöglicht wird.

Um den Raum, radial außerhalb der Dichtlippe, in dem sich abzudichtendes Medium befindet, sicher gegenüber der Umgebung abzudichten, ist die flanschförmige Gegenfläche erforderlich, an der sich die quasistatisch beanspruchte zweite Dichtkante abstützt. Eine geringe Relativbewegung zwischen der zweiten Dichtkante und der Gegenfläche erfolgt nur dann, wenn temperaturbedingte Wärmedehnungen ausgeglichen werden und/oder wenn die abzudichtende Welle während ihres Gebrauchs Unwuchterscheinungen aufweist.

Um trotz der weitgehend ausgeglichenen Druckverhältnisse radial innerhalb und radial außerhalb der Dichtlippe stets eine ausreichende Anpressung der ersten Dichtkante an die Oberfläche der abzudichtenden Welle oder Stange zu erreichen, hat es sich als vorteilhaft bewährt, wenn das Verhältnis der Länge der Dichtlippe vom Stützkörper zur zweiten Dichtkante zu der Länge vom Stützkörper zur ersten Dichtkante größer als 1 ist. Durch eine solche Ausgestaltung wirkt der radial außerhalb der Dichtlippe anliegende Druck auf einen größeren Hebelarm als der Druck radial innerhalb der Dichtlippe, wobei die Anpresskraft der ersten Dichtkante an die abzudichtende Oberfläche durch das zuvor beschriebene Verhältnis einstellbar ist. Ein vollständiger Druckausgleich an der Dichtlippe herrscht, wenn das Verhältnis 1 ist. Je größer das Verhältnis, ausgehend von 1 wird, desto höher werden der Anpressdruck der ersten Dichtkante an die abzudichtende Oberfläche und der Verschleiß.

Bevorzugt beträgt das zuvor beschriebene Verhältnis 1,01 bis 1,5. Hierbei wird ein besonders guter Kompromiß aus guter Abdichtung einerseits und langer Gebrauchsdauer des Dichtrings durch geringe Reibung andererseits erzielt.

Die Dichtlippe besteht bevorzugt aus einem elastomerem Werkstoff, während der Stützkörper aus einem zäh-harten Werkstoff, beispielsweise einem metallischen Werkstoff besteht. Davon abweichend kann der Stützkörper auch aus einem polymeren Werkstoff bestehen.

Die Durchbrechung ist im Radialsteg des Stützkörpers angeordnet. Im Gegensatz zu einer Durchbrechung beispielsweise in der Dichtlippe auf der dem abzudichtenden Raum zugewandten Seite der ersten Dichtkante, ist bei einer solchen Ausgestaltung von Vorteil, daß der Radialsteg stets ortsfest innerhalb des Einbauraums angeordnet ist und unabhängig von der Gebrauchsdauer und/oder dem abzudichtenden Medium stets gleichbleibende Abmessungen aufweist. Im Hinblick auf gleichbleibende Gebrauchseigenschaften, unabhängig von den Druckverhältnissen, ist das von Vorteil.

Der Stützkörper kann im wesentlichen rechtwinklig ausgebildet sein, wobei sich der Axialsteg im wesentlichen parallel zur Dichtlippe erstreckt und wobei der Dichtring eine sich axial vom abzudichtenden Raum wegerstrekende offene, C-förmige Gestalt aufweist. Ein solcher Dichtring ist einfach und kostengünstig herstellbar. Außerdem wird durch den Axialsteg ein ausgezeichneter, haltbarer Sitz innerhalb der Ausnehmung eines Gehäuses bewirkt.

Der Axialsteg kann zumindest radial außenseitig eine Ummantelung aus elastomerem Werkstoff aufweisen. Eine solche Ummantelung, die als Dichtung ausgebildet ist, ist immer dann von Vorteil, wenn der Einbauraum beispielsweise durch eine Bohrung in einem Gehäuse gebildet ist, die in Richtung der Umgebung offen ist.

Für manche Anwendungsfälle, insbesondere für Anwendungsfälle, in denen die Drücke auf die Dichtlippe vollständig ausgeglichen sind oder der Druck innerhalb des abzudichtenden Raums zumindest zeitweise im wesentlichen dem Atmosphärendruck entspricht, hat es sich als vorteilhaft bewährt, wenn radial außenseitig der ersten Dichtkante, im wesentlichen in der selben Radialebene, eine Ringwendelfeder angeordnet ist. Dadurch ist sichergestellt, daß die erste Dichtkante die abzudichtende Oberfläche stets dichtend berührt.

Die Gegenfläche wird bevorzugt durch einen separat erzeugten Ring gebildet, der mit dem Stützkörper dichtend verbunden ist. Der Ring kann beispielsweise, wie der Stützkörper, im wesentlichen rechtwinklig gestaltet sein, wobei der Axialsteg des Stützkörpers den Axialsteg des Rings unter radialer Vorspannung außenumfangsseitig dichtend umschließt. Zur Abdichtung zwischen den beiden Axialstegen kann beispielsweise eine Ummantelung des Axialstegs des Stützkörpers aus elastomerem Werkstoff vorgesehen sein. Bei einer solchen Ausgestaltung ist von Vorteil, daß der Dichtring zur Abdichtung druckbeaufschlagter Räume in übliche Aufnahmebohrungen eingesetzt werden kann. Eine besondere Ausgestaltung des Gehäuses, beispielsweise mit angeformter Gegenfläche, ist nicht erforderlich.

Die Gegenfläche kann einen einstückigen Bestandteil des Stützkörpers bilden. Der Stützkörper ist bevorzugt im wesentlichen U-förmig, radial nach innen offen ausgebildet, wobei sich der Radialsteg und die Gegenfläche im wesentlichen parallel zueinander erstrecken. Die Gegenfläche ist der abzudichtenden Oberfläche in radialer Richtung weiter angenähert, als der Radialsteg, wobei die zweite Dichtkante die Gegenfläche unter elastischer Vorspannung anliegend berührt. Die Gegenfläche geht radial außenseitig in das dem abzudichtenden Raum abgewandte Ende des Axialstegs des Stützkörpers über.

Um einen verbesserten Schutz sowohl der ersten als auch der zweiten Dichtkante vor äußeren Verunreinigungen zu erreichen, kann es vorgesehen sein, daß die radial innenseitige Begrenzung der Gegenfläche die abzudichtende Oberfläche der Stange oder Welle mit radialem Abstand umschließt, wobei in dem durch den Abstand gebildeten Spalt eine Schmutz-Dichtlippe angeordnet und mit der radial innenseitigen Begrenzung verbunden ist. Beispielsweise für Anwendungen in Pumpen oder der Lenkung eines Kraftfahrzeugs, ist das zur Erzielung gleichbleibend guter Gebrauchseigenschaften während einer langen Gebrauchsdauer von hervorzuhebendem Vorteil.

### Kurzbeschreibung der Zeichnung

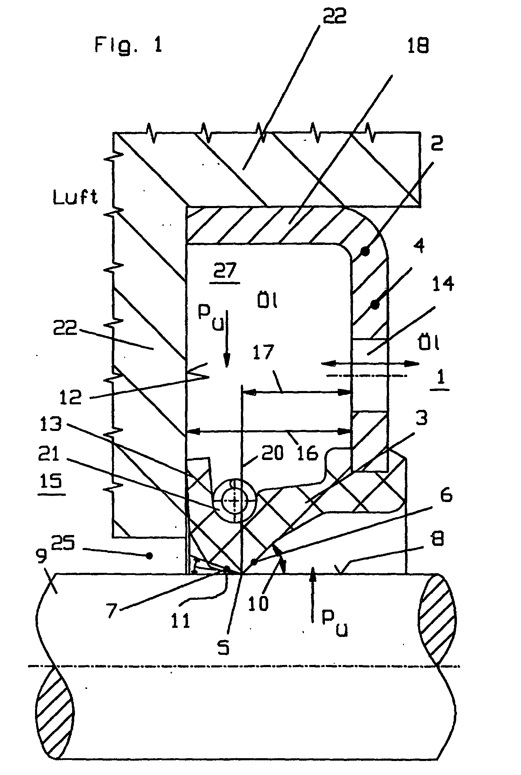

Dichtringe werden nachfolgend anhand der Figuren 1 bis 5 näher beschrieben. Diese zeigen jeweils ein Ausführungsbeispiel in schematischer Darstellung.

In den Figuren 1 bis 5 ist jeweils ein Ausführungsbeispiel eines Dichtrings zur Abdichtung druckbeaufschlagter Räume 1 gezeigt. Zur Anwendung gelangen die gezeigten Dichtringe beispielsweise in Pumpen oder Lenkungen von Kraftfahrzeugen, wobei während der bestimmungsgemäßen Verwendung innerhalb der Räume 1 Druckstöße auftreten können. Um Beschädigungen des Dichtrings durch Druckstöße innerhalb des Raums 1 zu vermeiden, ist ein weitgehender Druckausgleich an der ersten Dichtlippe 3 dergestalt vorgesehen, daß radial innerhalb und radial außerhalb der ersten Dichtlippe 3 im wesentlichen dieselben Druckverhältnisse herrschen, so daß der Druck, der auf die erste Dichtlippe 3 wirkt, radial innen- und außenseitig im wesentlichen ausgeglichen ist. In den Ausführungsbeispielen Figuren 1 bis 6 ist jeweils ein Stützkörper 2 vorgesehen, der in den hier gezeigten Ausführungsbeispielen aus einem metallischen Werkstoff besteht. An den Radialsteg 4 des Stützkörpers 2 ist radial innenseitig eine erste Dichtlippe 3 aus elastomerem Werkstoff angeformt, die sich axial entgegen des abzudichtenden Raums 1 erstreckt. Die erste Dichtkante 5 ist auf der abzudichtenden Oberfläche 8 einer Stange oder Welle 9 abgestützt und umschließt diese dichtend. Die erste Dichtkante 5 ist durch zwei einander durchschneidende Kegelflächen 6, 7 begrenzt, wobei die dem abzudichtenden Raum 1 zugewandte erste Kegelfläche 6 mit der Oberfläche 8 einen größeren Winkel 10 einschließt; die zweite Kegelfläche 7 schließt demgegenüber mit der Oberfläche 8 einen relativ kleineren Winkel 11 ein.

Die zweite Dichtlippe in Form der zweiten Dichtkante 13 ist an einer Gegenfläche 12 abgestützt, die sich in radialer Richtung erstreckt, wobei die zweite Dichtkante 13 die Gegenfläche 12 quasistatisch dichtend berührt.

Die erste 3 und zweite Dichtlippe können - in Abhängigkeit vom jeweiligen Anwendungsfall - herstellungsbedingt gerundet oder eben ausgebildet sein. Die grundsätzliche Funktion unterscheidet sich von Dichtlippen mit Dichtkanten nicht.

Innerhalb des Hohlraums 27, der durch die Dichtlippe 3, die Gegenfläche 12, den Axialsteg 18 und den Radialsteg 4 begrenzt ist, befindet sich abzudichtendes Medium, wobei der Hohlraum 27 durch die Durchbrechung 14 mit dem abzudichtenden Raum 1 verbunden ist, so daß innerhalb des Raums 1 und des Hohlraums 27 ein übereinstimmender Druck herrscht.

In den hier gezeigten Ausführungsbeispielen beträgt das Verhältnis der Länge 16 der Dichtlippe 3 vom Stützkörper 2 zur zweiten Dichtkante 13 zu der Länge 17 vom Stützkörper 2 zur ersten Dichtkante 5 1,4.

In jedem der gezeigten Ausführungsbeispiele ist die Durchbrechung 14 zur Verbindung des Raums 1 mit dem Hohlraum 27 innerhalb des Radialstegs 4 des Stützkörpers 2 angeordnet, wobei in den hier gezeigten Ausführungsbeispielen jeweils sechs in Umfangsrichtung gleichmäßig verteilte Durchbrechungen vorgesehen sind.

In Figur 1 ist ein Ausführungsbeispiel eines Dichtrings gezeigt, der nicht Gegenstand der Erfindung ist. Die Gegenfläche 12 ist in diesem Ausführungsbeispiel ein Bestandteil eines Gehäuses 22, in das der Dichtring eingepresst ist. Die zweite Dichtkante 13 stützt sich unter axialer elastischer Vorspannung an der Gegenfläche 12 ab und bewirkt dadurch in Verbindung mit der ersten Dichtkante 5 eine Abdichtung des abzudichtenden Mediums gegenüber der Umgebung 15.

In diesem Ausführungsbeispiel ist der Axialsteg 18 unmittelbar in das Gehäuse 22 eingepreßt. Eine mögliche Leckage zwischen dem Axialsteg 18 und dem Gehäuse 22 hat keine negativen Auswirkungen, da das abzudichtende Medium in den Hohlraum 27 gelangt und hier durch die zweite Dichtkante 13 von der Umgebung 15 ferngehalten wird.

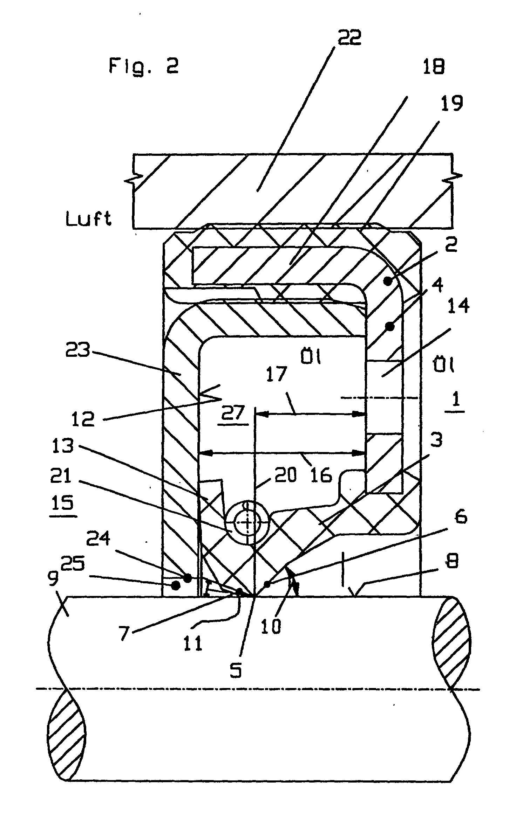

In Figur 2 ist ein erfindungsgemäßes Ausführungsbeispiel gezeigt, wobei sich der Dichtring vom Ausführungsbeispiel Figur 1 dadurch unterscheidet, daß die Gegenfläche 12 einen Bestandteil des Dichtrings bildet. Die Gegenfläche 12 ist Bestandteil eines separat erzeugten Rings 23, der ebenso, wie der Stützkörper 2, aus einem metallischen oder polymeren Werkstoff bestehen kann. Metallische Werkstoffe sowohl für den Stützkörper 2 als auch für den Ring 23 haben sich als vorteilhaft bewährt, da sie auch bei einer langen Gebrauchsdauer keine Setzungserscheinungen aufweisen.

Der Axialschenkel 18 ist in diesem Ausführungsbeispiel mit einer Ummantelung 19 aus elastomerem Werkstoff versehen, zur Abdichtung des Hohlraums 27 gegenüber der Umgebung 15.

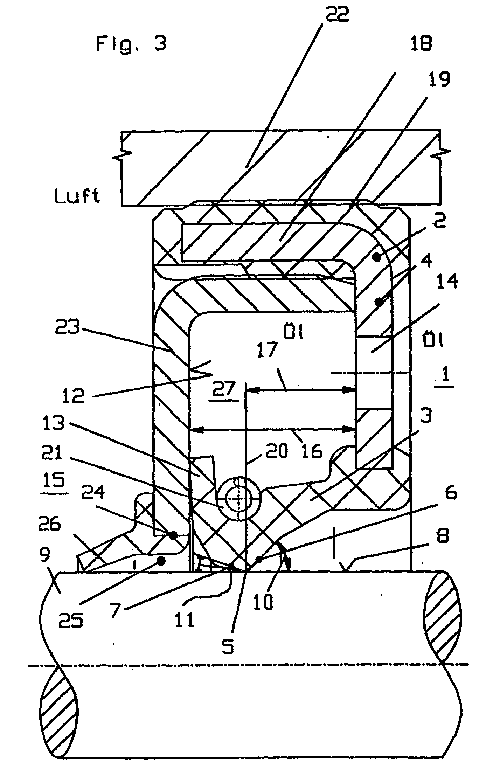

Das Ausführungsbeispiel aus Figur 3 entspricht im wesentlichen dem Ausführungsbeispiel aus Figur 2, wobei die radial innenseitige Begrenzung 24 der Gegenfläche 12 die abzudichtende Oberfläche 8 mit radialem Abstand umschließt und in dem durch den Abstand gebildeten Spalt 25 eine Schmutz-Dichtlippe 26 angeordnet ist. Durch diese Schmutz-Dichtlippe 26 sind die beiden Dichtkanten 5, 13 vor Verunreinigungen aus der Umgebung 15 geschützt, so daß gleichbleibend gute Gebrauchseigenschaften während einer langen Gebrauchsdauer auch dann erzielt werden können, wenn der Dichtring einer starken Schmutzbeaufschlagung ausgesetzt ist.

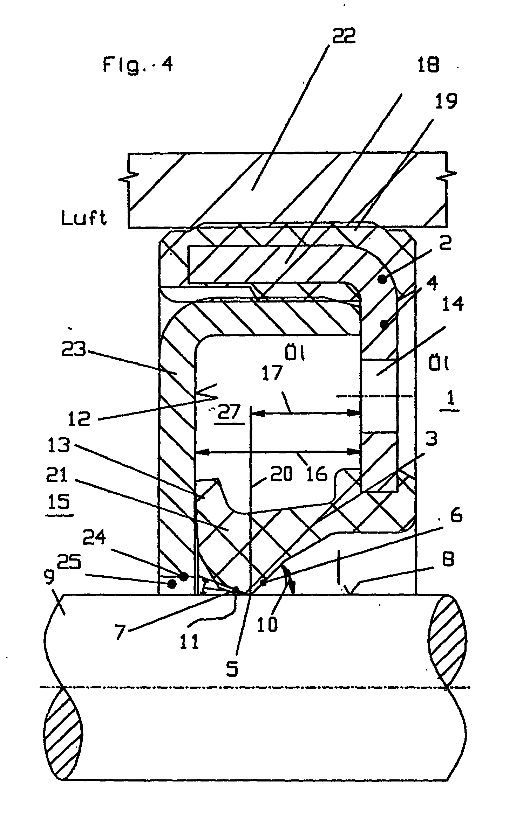

Figur 4 zeigt ein weiteres erfindungsgemäßes Ausführungsbeispiel, das im wesentlichen den Ausführungsbeispielen aus den Figuren 2 und 3 entspricht. Abweichend davon fehlt beim Ausführungsbeispiel aus Figur 4 die Ringwendelfeder 21, die in den Dichtringen aus den übrigen Ausführungsbeispielen zur Anwendung gelangt.

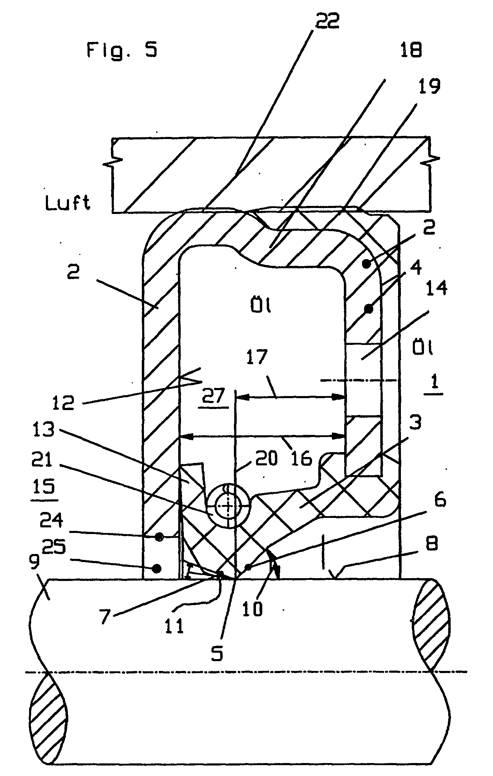

In Figur 5 ist ein weiteres erfindungsgemäßes Ausführungsbeispiel gezeigt, das sich durch einen besonders einfachen und teilearmen Aufbau auszeichnet. Die Gegenfläche 12 bildet in diesem Ausführungsbeispiel einen einstückigen Bestandteil des Stützkörpers 2, wobei sich die Gegenfläche 12 im wesentlichen parallel zum Radialsteg 4 erstreckt. Das Ausführungsbeispiel aus Figur 5 weist einen ebenso teilearmen Aufbau auf, wie das Ausführungsbeispiel aus Figur 1, wobei sich das Ausführungsbeispiel aus Figur 5 auch in einfache Gehäusebohrungen einpressen läßt, da die Gegenfläche 12 einen integrierten Bestandteil des Stützkörpers 2 bildet.

Die in den Figuren 1 bis 3 und 5 gezeigten Ringwendelfedern 21 sind im wesentlichen in der Radialebene 20 der ersten Dichtkante 5 angeordnet.

Die ersten und zweiten Dichtlippen aus den Figuren 1 ubis 5 können jeweils statt der Dichtkanten herstellungsbedingt gerundete oder ebene Dichtbereiche aufweisen.

## Patentansprüche

1. Dichtring zur Abdichtung druckbeaufschlagter Räume (1) mit einem Stützkörper (2), der mit einer im Gebrauchszustand dynamisch beanspruchbaren ersten Dichtlippe (3) verbunden ist, die sich ausgehend von einem Radialsteg (4) des Stützkörpers (2), axial vom abzudichtenden Raum (1) weg erstreckt, wobei auf der dem abzudichtenden Raum (1) axial abgewandten Seite der ersten Dichtlippe (3) eine sich an einer flanschförmigen Gegenfläche (12) des Dichtringes abstützende, quasistatisch beanspruchbare zweite Dichtlippe (13) angeordnet ist, wobei der Dichtring zumindest eine leitungsförmige Durchbrechung (14) für das abzudichtende Medium aufweist, zur Druckbeaufschlagung der ersten Dichtlippe (3) auf der während des Gebrauchs vorhandenen Stange oder Welle (9) radial abgewandten Seite, wobei der abzudichtende Raum (1) gegenüber der Umgebung (15) durch die erste (3) und die zweite Dichtlippe (13) abdichtbar ist und die zweite Dichtlippe (13) als Dichtkante materialeinheitlich mit der ersten Dichtlippe (3) ausgebildet ist, **dadurch gekennzeichnet, daß** die leitungsförmige Durchbrechung (14) im Radialsteg (4) des Stützkörpers (2) angeordnet ist, der Dichtring in eine Aufnahmebohrung eingesetzt werden kann und die flanschförmige Gegenfläche (12) entweder durch einen separat erzeugten Ring (23) gebildet ist, der mit dem Stützkörper (2) dichtend verbunden ist, oder einen einstückigen Bestandteil des Stützkörpers (2) bildet.

2. Dichtring nach Anspruch 1, **dadurch gekennzeichnet, daß** die erste Dichlippe (3) eine dynamisch beanspruchte erste Dichtkante (5) aufweist, die durch zwei einander durchschneidende Kegelflächen (6, 7) begrenzt ist, wobei die dem abzudichtenden Raum (1) zugewandte erste Kegelfläche (6) mit der Oberfläche (8) der abzudichtenden Stange oder Welle (9) einen größeren Winkel (10, 11) einschließt, als die dem abzudichtenden Raum (1) abgewandte zweite Kegelfläche (7).

3. Dichtring nach Anspruch 2, **dadurch gekennzeichnet, dass** die Dichtkante abgerundet ausgeblidet ist.

4. Dichtring nach Anspruch 3, **dadurch gekennzeichnet, dass** die Abrundung einen Radius von 0,05 bis 0,3 mm aufweist.

5. Dichtring nach einem der Ansprüche 1 bis 4, **dadurch gekennzeichnet, daß** das Verhältnis der Länge (16) der Dichtlippe (3) vom Stützkörper (2) zur als Dichtkante ausgebildeten zweiten Dichtlippe (13) zu der Länge (17) vom Stützkörper (2) zur ersten Dichtkante (5) größer als 1 ist.

6. Dichtring nach Anspruch 5, **dadurch gekennzeichnet, daß** das Verhältnis 1,01 bis 1,5 beträgt.

7. Dichtring nach einem der Ansprüche 1 bis 6, **dadurch gekennzeichnet, daß** die Dichtlippe (3) aus elastomerem Werkstoff besteht.

8. Dichtring nach einem der Ansprüche 1 bis 7, **dadurch gekennzeichnet, daß** der Stützkörper (2) aus einem zäh-harten Werkstoff besteht.

9. Dichtring nach einem der Ansprüche 1 bis 8, **dadurch gekennzeichnet, daß** der Stützkörper (2) im wesentlichen rechtwinklig ausgebildet ist, daß sich der Axialsteg (18) im wesentlichen parallel zur Dichtlippe (3) erstreckt und daß der Dichtring eine sich axial vom abzudichtenden Raum (1) wegerstrekende offene, C-förmige Gestalt aufweist.

10. Dichtring nach Anspruch 9, **dadurch gekennzeichnet, daß** der Axialsteg (18) zumindest radial außenseitig eine Ummantelung (19) aus elastomerem Werkstoff aufweist.

11. Dichtring nach einem der Ansprüche 1 bis 10, **dadurch gekennzeichnet, daß** radial außenseitig der ersten Dichtkante (5), im wesentlichen in der selben Radialebene (20) eine Ringwendelfeder (21) angeordnet ist.

12. Dichtring nach einem der Ansprüche 1 bis 11, **dadurch gekennzeichnet, daß** sich die Gegenfläche (12) im wesentlichen parallel zum Radialsteg (4) erstreckt.

13. Dichtring nach einem der Ansprüche 1 bis 12, **dadurch gekennzeichnet, daß** im Gebrauch die Gegenfläche (12) in das dem abzudichtenden Raum (1) abgewandte Ende des Axialstegs (18) übergeht.

14. Dichtring nach einem der Ansprüche 1 bis 13, **dadurch gekennzeichnet, daß** die radial innenseitige Begrenzung (24) der Gegenfläche (12) im Gebrauch die abzudichtende Oberfläche (8) der Stange oder Welle (9) mit radialem Abstand umschließt.

15. Dichtring nach Anspruch 14, **dadurch gekennzeichnet, daß** in dem durch den Abstand gebildeten Spalt (25) eine Schmutz-Dichtlippe (26) angeordnet und mit der radial innenseitigen Begrenzung (24) verbunden ist.

## Claims

1. A sealing ring for sealing pressurized enclosures (1), with a supporting body (2), which is connected to a first sealing lip (3) which can be dynamically loaded in the state of use and extends from a radial leg (4) of the supporting body (2) axially away from the enclosure (1) to be sealed, a second sealing lip (13), which can be quasi-statically loaded and is supported on a flange-like mating face (12) of the sealing ring being arranged on the side of the first sealing lip (3) that is facing axially away from the enclosure (1) to be sealed, the sealing ring having at least one conduit-shaped aperture (14) for the medium to be sealed, for applying pressure to the first sealing lip (3) on the side facing radially away from the rod or shaft (9) present during use, the enclosure (1) to be sealed being able to be sealed with respect to the surroundings (15) by the first sealing lip (3) and the second sealing lip (13), and the second sealing lip (13) being formed from the same material as the first sealing lip (3) as a sealing edge, **characterized in that** the conduit-shaped aperture (14) is arranged in the radial leg (4) of the supporting body (2), the sealing ring can be inserted into a receiving bore and the flange-like mating face (12) is either formed by a separately produced ring (23), which is connected in a sealing manner to the supporting body (2), or forms an integral component part of the supporting body (2).

2. A sealing ring according to claim 1, **characterized in that** the first sealing lip (3) has a dynamically loaded first sealing edge (5), which is delimited by two intersecting conical faces (6, 7), the first conical face (6), facing the enclosure (1) to be sealed, forming a greater angle (10, 11) with the surface (8) of the rod or shaft (9) to be sealed than the second conical face (7), facing away from the enclosure (1) to be sealed.

3. A sealing ring according to claim 2, **characterized in that** the sealing edge is rounded-off.

4. A sealing ring according to claim 3, **characterized in that** the rounding has a radius of 0.05 to 0.3 mm.

5. A sealing ring according to any one of claims 1 to 4, **characterized in that** the ratio of the length (16) of the sealing lip (3) from the supporting body (2) to the second sealing lip (13), formed as a sealing edge, to the length (17) from the supporting body (2) to the first sealing edge (5) is greater than 1.

6. A sealing ring according to claim 5, **characterized in that** the ratio is 1.01 to 1.5.

7. A sealing ring according to any one of claims 1 to 6, **characterized in that** the sealing lip (3) consists of elastomeric material.

8. A sealing ring according to any one of claims 1 to 7, **characterized in that** the supporting body (2) consists of tough material.

9. A sealing ring according to any one of claims 1 to 8, **characterized in that** the supporting body (2) is formed substantially at right angles, **in that** the axial leg (18) extends substantially parallel to the sealing lip (3) and **in that** the sealing ring has an open, C-shaped form extending away from the enclosure (1) to be sealed.

10. A sealing ring according to claim 9, **characterized in that** the axial leg (18) has at least radially on the outside a sheathing (19) of elastomeric material.

11. A sealing ring according to any one of claims 1 to 10, **characterized in that** an annular helical spring (21) is arranged radially outside the first sealing edge (5), substantially in the same radial plane (20).

12. A sealing ring according to any one of claims 1 to 11, **characterized in that** the mating face (12) extends substantially parallel to the radial leg (4).

13. A sealing ring according to any one of claims 1 to 12, **characterized in that**, during use, the mating face (12) goes over into the end of the axial leg (18) that is facing away from the enclosure (1) to be sealed.

14. A sealing ring according to any one of claims 1 to 13, **characterized in that**, during use, the radially inner delimitation (24) of the mating face (12) encloses the surface (8) to be sealed of the rod or shaft (9) with a radial spacing.

15. A sealing ring according to claim 14, **characterized in that** a dirt sealing lip (26) is arranged in the gap (25) formed by the spacing and is connected to the radially inner delimitation (24).

## Revendications

1. Bague d'étanchéité pour étanchéifier des chambres sous pression (1), comprenant un corps de support (2) relié à une première lèvre d'étanchéité (3) pouvant être soumise à des efforts dynamiques lors de l'état d'utilisation et s'étendant dans le sens axial en s'éloignant de la chambre à étanchéifier (1 ) à partir d'une branche radiale (4) du corps de support (2), une seconde lèvre d'étanchéité (13) qui peut être soumise à des efforts quasi-statiques et s'appuie sur une contre-surface en forme de bride (12) de la bague d'étanchéité étant située sur le côté de la première lèvre d'étanchéité (3) éloigné de la chambre à étanchéifier (1 ) dans le sens axial, la bague d'étanchéité étant pourvue d'au moins un perçage (14) en forme de conduite pour le milieu à étanchéifier afin d'appliquer une pression à la première lèvre d'étanchéité (3) sur le côté éloigné, dans le sens radial, de la tige ou de l'arbre (9) présent(e) pendant l'utilisation, la chambre à étanchéifier (1) pouvant être étanchéifiée vis-à-vis de l'environnement (15) grâce à la première (3) et à la seconde (13) lèvres d'étanchéité et la seconde lèvre d'étanchéité (13) étant exécutée, en tant qu'arête d'étanchéité, dans le même matériau que la première lèvre d'étanchéité (3), **caractérisée en ce que** le perçage (14) en forme de conduite est situé dans la branche radiale (4) du corps de support (2), la bague d'étanchéité peut être insérée dans un alésage de réception et la contre-surface (12) en forme de bride est soit formée par une bague (23) produite séparément qui est reliée de manière étanche au corps de support (2), soit forme une partie solidaire du corps de support (2).

2. Bague d'étanchéité selon la revendication 1, **caractérisée en ce que** la première lèvre d'étanchéité (3) est pourvue d'une première arête d'étanchéité (5) soumise à des efforts dynamiques et qui est limitée par deux surfaces coniques (6, 7) qui se coupent, la première surface conique (6), située sur le côté de la chambre à étanchéifier (1), formant un angle plus grand avec la surface (8) de la tige ou de l'arbre (9) à étanchéifier que la seconde surface conique (7), éloignée de la chambre à étanchéifier (1).

3. Bague d'étanchéité selon la revendication 2, **caractérisée en ce que** l'arête d'étanchéité est exécutée de manière à être arrondie.

4. Bague d'étanchéité selon la revendication 3, **caractérisée en ce que** l'arrondi a un rayon compris entre 0,05 et 0,3 mm.

5. Bague d'étanchéité selon l'une des revendications 1 à 4, **caractérisée en ce que** le rapport entre la longueur (16) de la lèvre d'étanchéité (3) depuis le corps de support (2) jusqu'à la seconde lèvre d'étanchéité (13), exécutée en tant qu'arête d'étanchéité, et la longueur (17) depuis le corps de support (2) jusqu'à la première arête d'étanchéité (5) est supérieur à 1.

6. Bague d'étanchéité selon la revendication 5, **caractérisée en ce que** le rapport est compris entre 1,01 et 1,5.

7. Bague d'étanchéité selon l'une des revendications 1 à 6, **caractérisée en ce que** la lèvre d'étanchéité (3) est formée d'un matériau élastomère.

8. Bague d'étanchéité selon l'une des revendications 1 à 7, **caractérisée en ce que** le corps de support (2) est formé d'un matériau coriace.

9. Bague d'étanchéité selon l'une des revendications 1 à 8, **caractérisée en ce que** le corps de support (2) est exécuté de manière à être essentiellement rectangulaire, **en ce que** la branche axiale (18) s'étend de manière essentiellement parallèle à la lèvre d'étanchéité (3) et **en ce que** la bague d'étanchéité a une forme en C qui s'ouvre en s'éloignant de la chambre à étanchéifier (1 ) dans le sens axial.

10. Bague d'étanchéité selon la revendication 9, **caractérisée en ce que** la branche axiale (18) est pourvue, au moins sur le côté extérieur dans le sens radial, d'un revêtement (19) en matériau élastomère.

11. Bague d'étanchéité selon l'une des revendications 1 à 10, **caractérisée en ce qu'**un ressort spiral annulaire (21) est situé sur le côté extérieur de la première arête d'étanchéité (5), dans le sens radial, essentiellement dans le même plan radial (20).

12. Bague d'étanchéité selon l'une des revendications 1 à 11, **caractérisée en ce que** la contre-surface (12) s'étend de manière essentiellement parallèle à la branche radiale (4).

13. Bague d'étanchéité selon l'une des revendications 1 à 12, **caractérisée en ce que** la contre-surface (12) se confond, lors de l'utilisation, avec l'extrémité de la branche axiale (18) éloignée de la chambre à étanchéifier (1 ).

14. Bague d'étanchéité selon l'une des revendications 1 à 13, **caractérisée en ce que** la limitation (24) de la contre-surface (12) située sur le côté intérieur, dans le sens radial, entoure la surface à étanchéifier (8) de la tige ou de l'arbre (9) avec une distance radiale lors de l'utilisation.

15. Bague d'étanchéité selon la revendication 14, **caractérisée en ce qu'**une lèvre d'étanchéité anti-poussiére (26) est située dans la fente (25) formée par la distance et est reliée à la limitation (24) située sur le côté intérieur dans le sens radial.
